# FASCICULE DE BREVET EUROPEEN

(11) **EP 1 945 470 B1**
(45) Date de publication et mention de la délivrance du brevet: **03.08.2011**
(21) Numéro de dépôt: 06806942.6
(22) Date de dépôt: 03.10.2006
(51) Int. Cl.: B60C 23/04, B60C 23/00

(54) **ACTIONNEUR SENSIBLE À LA PRESSION HYDROSTATIQUE**
AUF HYDROSTATISCHEN DRUCK EMPFINDLICHES STELLGLIED
HYDROSTATIC-PRESSURE-SENSITIVE ACTUATOR

(30) Priorité: 06.10.2005 FR 0510297
(43) Date de publication de la demande: 23.07.2008
(73) Titulaire: Société de Technologie Michelin, 63000 Clermont-Ferrand (FR); Michelin Recherche et Technique S.A., 1763 Granges-Paccot (CH)
(72) Inventeur: PERRIER, Bernard, F-63100 Clermont-Ferrand (FR)
(74) Mandataire: Dequire, Philippe Jean-Marie Denis
(86) Numéro de dépôt international: PCT/EP2006/067000
(87) Numéro de publication internationale: WO 2007/039607

(56) Documents cités:
- EP-A- 1 622 220
- GB-A- 2 016 383
- US-A- 5 663 496
- US-B1- 6 486 771

## Description

L'invention concerne la mise en place sur un véhicule d'un moyen capable de transmettre des informations depuis l'intérieur de la cavité formée par un pneumatique et une jante vers une unité centrale disposée dans le véhicule.

Dans son application principale, l'invention s'applique de manière générale à la mise en place sur un véhicule des différents composants d'un système - notamment et à titre non limitatif - de surveillance de la pression des pneumatiques de ce véhicule, comme des dispositifs (ou « modules » de roues) destinés à acquérir, traiter et transmettre des informations concernant l'état des pneumatiques d'un véhicule. Plus précisément, elle concerne la fixation dans la cavité formée par le pneumatique et la jante de la roue des dispositifs ou modules de roues destinés à acquérir, traiter et transmettre notamment les valeurs de pression de gonflage, vers notamment une unité centrale embarquée.

S'agissant d'un « module de roue », c'est-à-dire d'un dispositif de saisie, de traitement et/ou de transmission d'informations destiné à être placé dans la cavité définie plus haut, les problèmes rencontrés sont de deux types principaux. Ce sont d'une part les problèmes liés à la rotation rapide de la roue sur le sol (force centrifuge, vibrations, etc.) et d'autre part les contraintes de montage du pneumatique sur la jante, ou du démontage lorsque l'on doit changer le pneumatique.

On est de plus limité au niveau du dimensionnement, donc au niveau de la puissance des piles. Celles ci doivent cependant avoir un temps de vie très long, ce qui signifie que la puissance d'émission ne pourra pas être augmentée à volonté. On devra au contraire la conserver aussi faible que possible et de toute façon rester en deçà des valeurs autorisées par les normes en vigueur.

Il faut donc que le système recherché soit résistant à la force centrifuge et aux vibrations, qu'il soit de faible encombrement afin de ne pas gêner les montages/démontages du pneumatique, que sa puissance d'émission reste compatible avec la puissance de l'alimentation en énergie, et que néanmoins la transmission des signaux soit satisfaisante.

De nombreuses solutions ont été proposées pour fixer ces modules de roues. Parmi celles-ci, la demande de brevet WO 96/15919 utilise des modules de roue fixés aux roues par l'intermédiaire des tiges des valves de gonflage et de dégonflage de ces roues.

Cette solution entraîne cependant un problème de montage et de démontage des pneumatiques particulièrement lorsque les valves ne débouchent pas dans une paroi de la gorge de montage.

La figure 1 du brevet EP 0 701 911 présente une jante pour véhicule utilitaire industriel avec, axialement de l'extérieur vers l'intérieur, un siège extérieur, un bossage extérieur de sécurité ou « hump », une zone cylindrique d'emboîtage du disque de roue et une gorge de montage. Dans le cas de cette jante, la valve est disposée dans la paroi intérieure du hump et le module de roue fixé à la tige de valve repose contre la zone d'emboîtage du disque en dehors de la gorge de montage. Cette position du module de roue rend très difficile le montage et le démontage des pneumatiques.

Un autre mode de fixation est présenté par le brevet US 5 742 984. Le module de roue est disposé contre la paroi extérieure de la gorge de montage de la jante de la roue par une bride annulaire. Cette position du module de roue est compatible avec un montage et un démontage aisé des pneumatiques sur les roues, mais on constate cependant que la proximité de la paroi métallique de la roue perturbe sensiblement la qualité des transmissions radio entre le module de roue et le récepteur central du système de surveillance.

L'invention a pour objet un actionneur destiné à être utilisé dans une enceinte pressurisée pour créer en réponse à une variation de pression hydrostatique un mouvement relatif entre deux éléments caractérisé en ce qu'il comprend un bloc de mousse alvéolaire à cellules fermées fixé aux deux éléments.

Un tel bloc comprend un ensemble de cellules fermées remplies d'un gaz à une pression supérieure à la pression atmosphérique. En conséquence, à la pression atmosphérique, toutes les cellules du bloc sont déployées. En revanche, placé dans une cavité dont la pression hydrostatique augmente, on constate que le volume du bloc diminue progressivement. L'amplitude de la diminution de volume est fonction de la pression hydrostatique imposée mais aussi du volume des alvéoles du bloc. Sous très forte pression hydrostatique, le volume du bloc correspond sensiblement au volume des parois seules. Tous ces paramètres peuvent être aisément modifiés par un homme du métier en fonction des conditions d'utilisation prévues.

Selon un premier mode d'utilisation, le bloc de mousse est disposé entre les deux éléments et fixé à ceux-ci par deux parois sensiblement planes et parallèles. Un tel actionneur va ainsi soumettre les deux parois et les deux éléments à un mouvement de rapprochement sensiblement linéaire lors de l'augmentation de la pression hydrostatique ; ce mouvement est réversible lors de la diminution de la pression hydrostatique appliquée à l'actionneur.

Selon un second mode d'utilisation, le bloc de mousse est fixé aux deux éléments par deux parois sensiblement planes, définissant un axe pivot p et faisant entre elles un angle alpha.

Lors d'une augmentation de la pression hydrostatique, le bloc de matériau alvéolaire à cellules fermées de l'actionneur va se contracter et ainsi entraîner une mouvement de rapprochement des deux faces proche d'une rotation autour de l'axe pivot p ; comme dans le premier mode de réalisation, ce mouvement de rotation est réversible lors de la diminution de la pression hydrostatique appliquée à l'actionneur.

L'angle alpha entre les deux parois de liaison est de préférence inférieur à 180°.

L'angle alpha est avantageusement compris entre 80 et 100 degrés. Cela permet un excellent fonctionnement mécanique des actionneurs selon l'invention.

Selon un mode de réalisation préférentiel, chacune des parois est reliée à l'un des éléments par un élément de fixation rigide et les deux éléments de fixation sont reliés entre eux par une charnière d'axe de rotation correspondant au pivot p.

Ce mode de réalisation permet de bien maîtriser le mouvement relatif imposé aux deux éléments lors d'une variation de pression hydrostatique. Il permet aussi de renforcer la résistance mécanique de l'actionneur.

L'actionneur peut comporter en plus un clip de blocage pour bloquer les deux éléments dans une position relative donnée obtenue à une pression hydrostatique supérieure à la pression atmosphérique. L'avantage d'un tel clip est de maintenir les deux éléments dans une position déployée donnée, stable et indépendante des variations de pression hydrostatique ultérieures. Le clip peut aussi permettre de maintenir cette position lors d'une diminution ultérieure de la pression hydrostatique, si c'est nécessaire.

Les actionneurs selon l'invention peuvent aussi comporter deux blocs de matériau alvéolaires à cellules fermées reliés par une plaque rigide. Cela permet d'augmenter sensiblement l'amplitude des mouvements produits lors d'une variation de pression tout en conservant une bonne efficacité mécanique.

De tels blocs de matériaux alvéolaires à cellules fermées peuvent être obtenus à partir de matériaux choisis parmi le groupe comprenant les mousses de polyéthylène, de polyuréthanne, à base d'un coupage de caoutchouc nitrile et de chlorure de polyvinyle, de polybutadiène 1-2, de polyisobutylène, de polyisoprène, de thermoplastique élastomère.

Pour que la durée de vie des actionneurs selon l'invention soit compatible avec leur usage, il est avantageux de traiter les surfaces des blocs de matériaux alvéolaires par métallisation ou application d'un film ou revêtement imperméable. Un tel traitement ou une telle application va fortement diminuer la perméabilité résiduelle du bloc et ainsi garantir une excellente durabilité des actionneurs.

L'invention a aussi pour objet un ensemble jante de roue et organe, tel un module de roue ou une antenne, destiné à être disposé à l'intérieur de la cavité interne formée par un pneumatique et une jante de roue, caractérisé en ce que l'organe est fixé sur la jante de roue par un actionneur selon l'invention.

Selon un mode de réalisation préférentiel, l'ensemble jante de roue et organe est tel que l'organe est adapté pour avoir deux positions différentes selon que la cavité formée par un pneumatique et la jante de roue est pressurisée ou non :
à pression relative nulle, l'organe est disposé dans une gorge de montage de la jante de la roue qui lui sert de « logement » et permet ainsi un montage aisé du pneumatique sur la jante de roue ; et
- à pression de gonflage P nominale, ou pression de service, l'actionneur est comprimé et l'organe se trouve écarté radialement extérieurement relativement à la gorge de montage et ainsi se trouve déployé.

De préférence, l'organe est fixé sur la jante de roue par un actionneur comprenant un clip de blocage.

L'invention a aussi pour objet un organe, tel un module de roue, destiné à être disposé et fixé à l'intérieur de la cavité interne formée par un pneumatique et une jante de roue pour acquérir, traiter et/ou transmettre des informations concernant l'état du pneumatique, comportant un boîtier et une antenne, caractérisé en ce que l'antenne est disposée extérieurement relativement au boîtier et est reliée au boîtier par un actionneur selon l'invention.

De préférence, l'actionneur est fixé d'une part à une extrémité de l'antenne et d'autre part au boîtier.

L'invention a aussi pour objet un organe, tel un module de roue, comportant un boîtier et une antenne avec une paroi intérieure adjacente au boîtier et une paroi extérieure, l'antenne étant fixée au boîtier par une extrémité, caractérisé en ce que la paroi extérieure de l'antenne est recouverte sur une partie de sa longueur par un bloc allongé ou couche allongée en matériau alvéolaire à cellules fermées qui se déforme sous la pression de service P, ce qui déploie l'antenne.

L'antenne peut consister en un câble ou fil fin noyé dans un film plastique, l'ensemble étant souple en flexion dans la longueur.

Selon un mode de réalisation avantageux, le profil de la couche de caoutchouc alvéolaire à cellules fermées présente une épaisseur qui diminue progressivement de l'extrémité reliée au boîtier jusqu'à l'extrémité libre. La courbure prise par l'antenne est ainsi maximale à proximité du boîtier.

D'autres caractéristiques et avantages de l'invention seront mieux compris à la lecture de la description qui va suivre, et en se référant au dessin annexé dans lequel :
- les figures 1 (a) et (b) représentent un schéma de principe d'un premier actionneur selon l'invention ;
- la figure 2 représente en coupe axiale un exemple de montage d'un module de roue sur une jante de roue de véhicule à la pression atmosphérique ;
- la figure 3 est similaire à la figure 2 avec le module déployé à la pression de service P dans la cavité du pneumatique ;
- la figure 4, similaire à la figure 3, présente un actionneur avec un clip de blocage en position repliée;
- la figure 5 présente l'ensemble de la figure 4 en position déployée avec le module placé dans la direction circonférentielle ;
- la figure 6 présente, vue en perspective, un premier mode de réalisation d'un module de roue avec une antenne en position repliée ;
- la figure 7 présente le module de la figure 6 avec l'antenne en position déployée ;
- la figure 8 présente un second mode de réalisation d'un module de roue avec antenne en position repliée ;
- la figure 9 présente le module de la figure 8 avec l'antenne en position déployée ;
- les figures 10 et 11 présentent un autre mode de réalisation d'un actionneur selon l'invention avec deux blocs de matériau alvéolaire à cellules fermées.

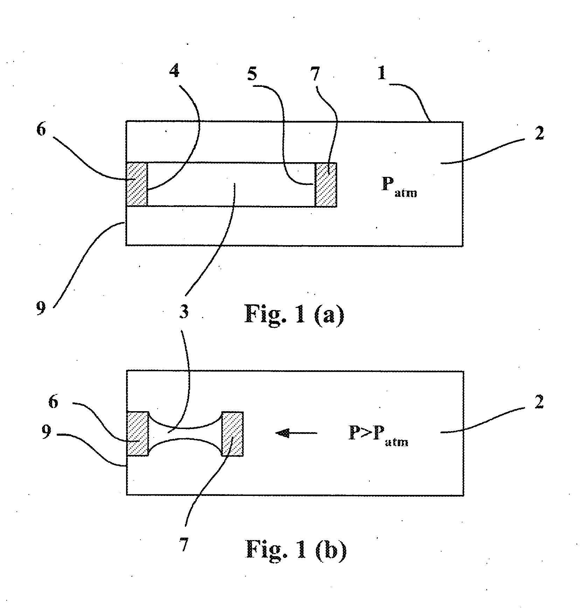

La figure 1 présente un premier mode de réalisation d'un actionneur selon l'invention. L'actionneur 3 est disposé dans une enceinte 1 qui forme une cavité 2 pressurisée. Il comprend un bloc 3 de matériau alvéolaire à cellules fermées. Le bloc 3 présente deux parois 4 et 5 sensiblement planes et parallèles. La paroi 4 est collée à un premier élément 6 qui est lui-même fixé à la paroi 9 de l'enceinte 1. La paroi 5 est collée à un second élément 7 qui est libre de se déplacer dans la cavité de l'enceinte.

A la figure 1 (a), la pression dans la cavité 2 est égale à la pression atmosphérique Pₐₜₘ. Le bloc 3 de matériau alvéolaire à cellules fermées est tel que les cellules ont une pression interne supérieure à cette pression atmosphérique. Le bloc 3 est ainsi en position repos.

A la figure 1 (b), la pression dans la cavité 2 est égale à une pression P supérieure à la pression atmosphérique Pₐₜₘ. Sous l'effet de la pression hydrostatique P, le bloc 3 s'est comprimé et l'élément 7 s'est rapproché de l'élément 6 dans la direction indiquée par la flèche. Le mouvement produit par cet actionneur 3 est sensiblement un mouvement de translation. Ce mouvement est réversible en fonction de la pression hydrostatique dans la cavité 2.

Les figures qui suivent prennent comme exemples des actionneurs disposés dans la cavité formée par un pneumatique et une jante de roue.

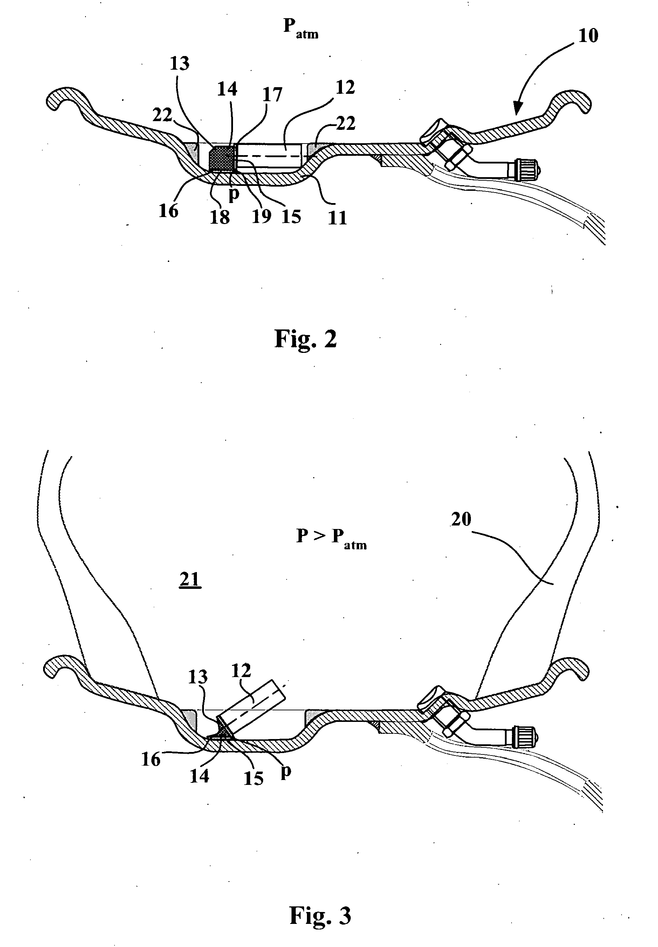

La figure 2 présente une jante de roue 10 pour véhicule poids lourd similaire à celle décrite à la figure 1 de la demande de brevet EP 0 701 911. Cette jante a notamment une gorge de montage 11 dans laquelle est fixée un module de roue 12 par l'intermédiaire d'un actionneur 13.

L'actionneur 13 se compose d'un bloc 14 de matériau alvéolaire à cellules fermées, d'un premier élément de fixation 17, collé à la paroi 15 du bloc 14 et fixé au module de roue 12, et d'un second élément de fixation 18 collé à la paroi 16 du bloc 14 et fixé à la paroi radialement extérieure de la gorge de montage 11 de la jante 10. Les deux éléments de fixation 17 et 18 sont de préférence reliés entre eux par une charnière 19 qui autorise un mouvement de rotation entre les deux éléments. L'axe de rotation ou pivot p est disposé circonférentiellement. La charnière sert aussi à renforcer la résistance mécanique de l'actionneur 13. Elle est particulièrement utile pour s'opposer aux efforts de centrifugation en roulage du module de roue et résister aux vibrations qu'il subit.

Le bloc 14 est de forme sensiblement parallélépipédique. Les deux parois 15 et 16 du bloc 14 sont sensiblement perpendiculaires et définissent ensemble un axe pivot p correspondant à l'axe de la charnière 19. L'élément de fixation 17 est fixé, par exemple par collage, à une paroi du module de roue. L'élément de fixation 18 est lui aussi fixé par tout moyen mécanique (collage, rivetage, soudage) à la paroi de la gorge de montage 11.

La figure 2 présente l'ensemble jante 10 et module de roue 12 à la pression atmosphérique. Le bloc 14 est déployé et est tel que le module de roue est disposé dans le creux formé par la gorge de montage 11 ce qui permet le montage d'un pneumatique sur la jante. A la figure 2, on voit aussi une pièce 22 disposée dans le logement constitué par la gorge de montage 11 et adaptée pour épouser la forme de la gorge de montage. Cette pièce 22 entoure le module de roue 12 et l'actionneur 13 et à pour but de protéger la pointe de bourrelet d'un pneumatique lors de son montage ou son démontage sur la jante 10.

La figure 3 présente l'ensemble jante 10 et module de roue 12 de la figure 2 lorsque un pneumatique 20 est monté sur la jante 10 et la pression de service P supérieure à la pression atmosphérique Pₐₜₘ est appliquée dans la cavité 21 formée par le pneumatique et la jante.

Le bloc 14 de l'actionneur 13 se comprime sous l'action de la pression hydrostatique P ce qui fait pivoter la paroi 15 relativement à la paroi 16, redresse et déploie le module de roue 12. La pression de service peut être de l'ordre de 5 à 9 bars. Dans ces conditions, le volume du bloc 14 est réduit pratiquement à celui des parois des cellules du matériau alvéolaire du bloc. On constate que le module 12 a effectué un mouvement de rotation autour de l'axe pivot p de l'ordre de quarante à cinquante degrés.

Ce mouvement permet à une partie substantielle du module 12 de quitter le creux formé par la gorge de montage 11 de la jante et de s'éloigner de la paroi métallique de la jante 10. Le module de roue 12 est usuellement constitué notamment d'un boîtier et d'une antenne. Ce mouvement permet à l'antenne de s'écarter de la paroi de la jante et améliore très sensiblement la qualité des transmissions radio entre le module de roue et une unité centrale du système, dont le module fait partie, disposée dans le véhicule.

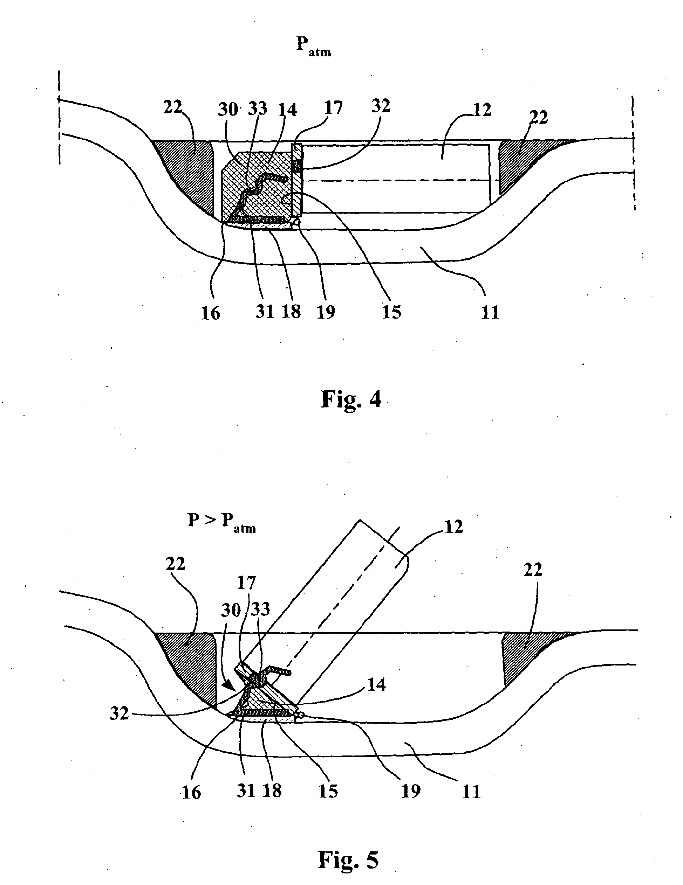

La figure 4 présente, en vue agrandie et à la pression atmosphérique, un ensemble jante 10 et module de roue 12 reliés par un actionneur 30 similaire à celui des figures 2 et 3 comportant un clip de blocage 31. La figure 5 présente le même ensemble sous la pression de service P.

Le clip de blocage 31 est solidaire du second élément de fixation 18 fixé à la paroi de la jante 10 d'une part et à la paroi 16 du bloc 14 d'autre part. Ce clip est adapté pour coopérer avec un ergot 32 solidaire du premier élément de fixation 17 fixé au module de roue 12 d'une part et à la paroi 15 du bloc 14 d'autre part. Les deux éléments de fixation sont reliés par la charnière 19. Lorsque la pression de gonflage augmente, le bloc 14 se contracte ce qui tend à faire pivoter la paroi 15 autour du pivot p de la charnière 19 vers la paroi 16. A un angle de pivotement donné, l'ergot 31 vient s'enclencher dans une encoche 33 du clip 31 ce qui bloque tout mouvement de rotation ultérieur.

Ce clip a l'avantage de maintenir le module de roue dans une position dépliée donnée, stable et indépendante des variations de pression de gonflage inhérentes aux conditions d'utilisation des véhicules (échauffements...).

Le clip peut aussi maintenir le module dans la position angulaire déployée donnée lors d'une diminution de pression jusqu'à la pression atmosphérique. C'est alors une action mécanique particulière, telle celle d'un bourrelet de pneumatique lors de son démontage qui libère l'actionneur.

On peut aussi calibrer le clip et l'ensemble encoche/ergot de telle sorte que, dès que la pression descend en dessous d'un seuil prédéterminé, la force de dilatation du bloc de matériau alvéolaire est supérieure à la résistance mécanique du clipsage, ce qui libère l'ergot et autorise le mouvement de rotation du module de roue vers son logement.

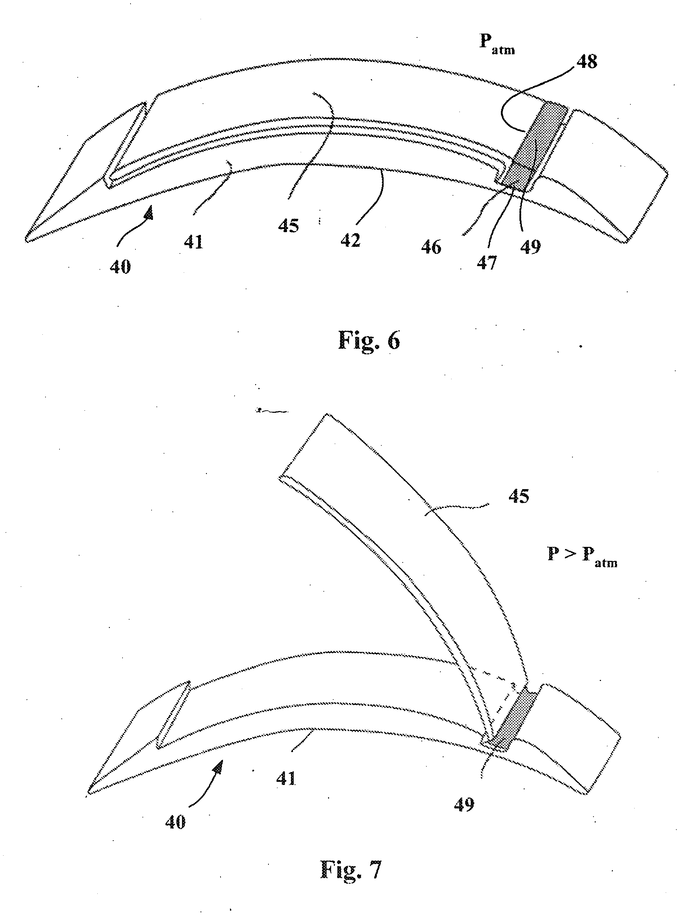

Les figures 6 et 7 présentent un autre objet de l'invention, un module de roue 40 destiné à être disposé et fixé à l'intérieur de la cavité interne formée par un pneumatique et une jante de roue pour acquérir, traiter et transmettre des informations concernant l'état du pneumatique. Ce module de roue 40 comporte un boîtier 41 et une antenne 45. On voit sur les figures que la face radialement intérieure 42 du boîtier présente une courbure notable correspondant à la courbure de la jante dans la direction circonférentielle. Ce boîtier est de préférence disposé avec sa grande longueur orienté selon la direction circonférentielle de la jante de roue. L'antenne 45 est disposée extérieurement relativement au boîtier 41 et est reliée au boîtier 41 par un actionneur 46 constituée d'un bloc 49 de matériau alvéolaire à cellules fermées avec une paroi 47 collée au boîtier 41 et une paroi 48 collée à une extrémité recourbée de l'antenne 45. La section droite du bloc 49 est sensiblement rectangulaire. Elle pourrait aussi être triangulaire. L'antenne 45 est usuellement relativement légère ce qui permet de ne pas prévoir de charnière de renfort. Mais bien entendu une telle charnière peut être ajoutée si c'est nécessaire.

La figure 7 présente le module 40 de la figure 6 placé dans une cavité pressurisée à une pression supérieure à la pression atmosphérique ce qui contracte le bloc 49 et déploie l'antenne.

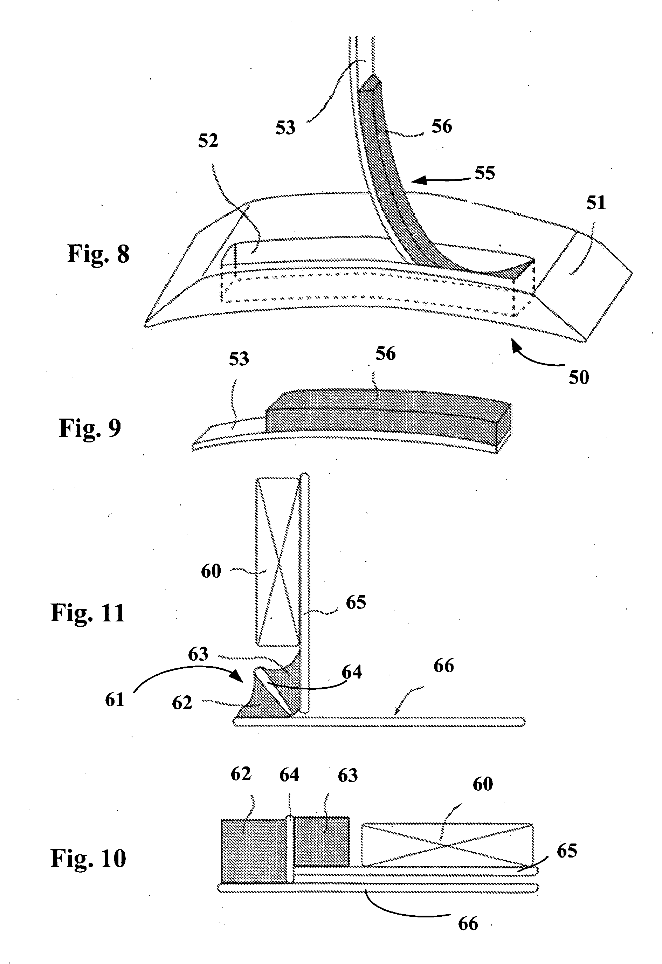

Les figures 8 et 9 présentent un mode de réalisation alternatif d'un module de roue 50 composé d'un boîtier 51 et d'une antenne 53 comportant un actionneur 55 selon l'invention.

L'antenne 53 est souple dans sa longueur et trouve place à la pression atmosphérique dans un logement 52 du boîtier 51. L'antenne 53 est recouverte sur une grande partie de sa longueur par un actionneur 55 constitué par un bloc allongé en mousse alvéolaire à cellules fermées 56 collé à la paroi de l'antenne. Lorsque la pression hydrostatique qui entoure le module 50 augmente, le bloc 56 se comprime ce qui entraîne une courbure de l'antenne et la déploie. L'antenne peut consister en un treillis fin noyé dans un film plastique très fin, l'ensemble restant souple dans la longueur.

La couche de matériau alvéolaire à cellules fermées peut avoir son épaisseur qui diminue progressivement de l'extrémité de l'antenne reliée au boîtier jusqu'à son extrémité. Les efforts de courbure sont fonction de l'épaisseur et cette variante entraîne un courbure plus prononcée de la partie de l'antenne qui est la plus proche de l'extrémité liée au boîtier.

La figure 10 présente un organe 60, tel un module de roue, qui est relié à un actionneur 61 permettant une rotation nettement plus importante. Cet actionneur comporte à l'état repos deux blocs 62, 63 de matériau alvéolaire à cellules fermées de forme sensiblement parallélépipédique reliés entre eux par une plaque rigide 64. Chaque bloc 62, 63 est collé à un élément de fixation 65, 66. Les deux éléments de fixation 65, 66 sont de préférence reliés par une charnière. Cette charnière peut être liée à la plaque rigide intermédiaire 64 ou non.

Un tel actionneur autorise comme le montre la figure 11 une rotation sous pression de l'ordre de 80 à 100 degrés.

L'invention n'est pas limitée aux exemples décrits et représentés et diverses modifications peuvent y être apportées sans sortir de son cadre défini par les revendications annexées.

## Revendications

1. Actionneur (13) destiné à être utilisé dans une enceinte pressurisée pour créer en réponse à une variation de pression hydrostatique un mouvement relatif entre deux éléments **caractérisé en ce qu'**il comprend un bloc (14) de mousse alvéolaire à cellules fermées fixé auxdits deux éléments (17, 18).

2. Actionneur selon la revendication 1, dans lequel ledit bloc de mousse est disposé entre les deux éléments et fixé auxdits deux éléments par deux parois sensiblement planes et parallèles.

3. Actionneur selon la revendication 1, dans lequel ledit bloc de mousse est fixé auxdits deux éléments par deux parois sensiblement planes, définissant un axe pivot p et faisant entre elles un angle alpha.

4. Actionneur selon la revendication 3, dans lequel l'angle alpha est inférieur à 180°.

5. Actionneur selon la revendication 4, dans lequel l'angle alpha est compris entre 80 et 100 degrés.

6. Actionneur selon l'une des revendications 3 à 5, dans lequel chacune desdites parois est reliée à l'un des éléments par un élément de fixation rigide et dans lequel les deux éléments de fixation sont reliés entre eux par une charnière d'axe de rotation correspondant au pivot p.

7. Actionneur selon l'une des revendications 1 à 6, comportant en plus un clip de blocage (31) pour bloquer les deux éléments dans une position relative donnée.

8. Actionneur selon l'une des revendications 1 à 7, comportant deux blocs de matériau alvéolaires à cellules fermées reliés par une plaque rigide.

9. Actionneur selon l'une des revendications 1 à 8, dans lequel ledit matériau alvéolaire à cellules fermées est choisi parmi le groupe comprenant les mousses de polyéthylène, de polyuréthanne, à base d'un coupage de caoutchouc nitrile et de chlorure de polyvinyle, de polybutadiène 1-2, de polyisobutylène, de polyisoprène, de thermoplastique élastomère.

10. Actionneur selon l'une des revendications 1 à 9, dans lequel les surfaces des blocs de matériaux alvéolaires sont traitées par métallisation ou application d'un film ou revêtement imperméable.

11. Ensemble jante de roue et organe, tel un module de roue ou une antenne, destiné à être disposé à l'intérieur de la cavité interne formée par un pneumatique et une jante de roue, **caractérisé en ce que** l'organe est fixé sur la jante de roue par un actionneur comprenant un bloc de mousse alvéolaire à cellules fermées, selon l'une des revendications 1 à 10.

12. Ensemble selon la revendication 11, tel que l'organe est adapté pour avoir deux positions différentes selon que la cavité formée par un pneumatique et la jante de roue est pressurisée ou non :
- à pression relative nulle, l'organe est disposé dans une gorge de montage de la jante de la roue qui lui sert de « logement » et permet ainsi un montage aisé du pneumatique sur la jante de roue; et
- à pression de gonflage P nominale, ou pression de service, l'actionneur est comprimé et l'organe se trouve écarté radialement extérieurement relativement à la gorge de montage et ainsi se trouve déployé.

13. Organe (40), tel un module de roue, destiné à être disposé et fixé à l'intérieur de la cavité interne formée par un pneumatique et une jante de roue pour acquérir, traiter et/ou transmettre des informations concernant l'état du pneumatique, comportant un boîtier et une antenne, **caractérisé en ce que** l'antenne est disposée extérieurement relativement audit boîtier et est reliée au boîtier par un actionneur comprenant un bloc de mousse alvéolaire à cellules fermées selon l'une des revendications 1 à 10.

14. Organe selon la revendication 13, dans lequel l'actionneur est fixé à une extrémité de l'antenne.

15. Organe, tel un module de roue, destiné à être disposé et fixé à l'intérieur de la cavité interne formée par un pneumatique et une jante de roue pour acquérir, traiter et/ou transmettre des informations concernant l'état du pneumatique, comportant un boîtier et une antenne avec une paroi intérieure adjacente au boîtier et une paroi extérieure, l'antenne étant fixée au boîtier par une extrémité, **caractérisé en ce que** la paroi extérieure de l'antenne est recouverte sur une partie de sa longueur par un bloc allongé ou couche allongée en matériau alvéolaire à cellules fermées qui se déforme sous la pression de service P, ce qui déploie l'antenne.

16. Organe selon la revendication 15, dans lequel l'antenne consiste en un câble ou fil fin noyé dans un film plastique, l'ensemble étant souple en flexion dans la longueur.

17. Organe selon l'une des revendications 15 et 16, dans lequel le profil de ladite couche de caoutchouc alvéolaire à cellules fermées présente une épaisseur qui diminue progressivement de l'extrémité reliée au boîtier jusqu'à l'extrémité libre.

## Claims

1. Actuator (13) designed to be used in a pressurized enclosure to create in response to a variation of hydrostatic pressure a relative movement between two parts, said actuator being **characterized in that** it comprises a closed-cell foam block (14) fixed to said two parts (17, 18).

2. Actuator according to Claim 1, in which said foam block is located between the two parts and fixed to said two parts by two basically planar and parallel walls.

3. Actuator according to Claim 1, in which said foam block is fixed to said two parts by two basically planar walls defining a pivot axis p and forming an angle alpha with respect to each other.

4. Actuator according to Claim 3, in which the angle alpha is less than 180°.

5. Actuator according to Claim 4, in which the angle alpha is between 80° and 100°.

6. Actuator according to one of Claims 3 to 5, in which each of said walls is connected to one of the parts by a rigid fixing part, and in which the two fixing parts are connected to each other by a hinge whose axis of rotation corresponds to the pivot p.

7. Actuator according to one of Claims 1 to 6, that also comprises a locking clip (31) for locking the two parts in a given relative position.

8. Actuator according to one of Claims 1 to 7, comprising two closed-cell foam blocks connected by a rigid plate.

9. Actuator according to one of Claims 1 to 8, in which said closed-cell foam material is chosen from the group comprising foams consisting of polyethylene, of polyurethane, foams based on a blend of nitrile rubber and of polyvinyl chloride, of 1,2-polybutadiene, of polyisobutylene, of polyisoprene, and of an elastomeric thermoplastic.

10. Actuator according to one of Claims 1 to 9, in which the surfaces of the cell foam blocks are treated by metallization or application of an impermeable film or coating.

11. Assembly comprising a wheel rim and a device such as a wheel unit or an antenna, which assembly is designed to be mounted in the internal cavity formed by a tyre and a wheel rim, and **characterized in that** the device is fixed to the wheel rim by an actuator comprising a closed-cell foam block according to one of Claims 1 to 10.

12. Assembly according to Claim 11, such that the device is designed to have two different positions depending on whether the cavity formed by a tyre and the wheel rim is or is not pressurized:
• at zero relative pressure, the device is located in a fitting well of the wheel rim which serves as its "housing" and thus permits easy fitting of the tyre to the wheel rim; and
• at nominal inflation pressure P, or service pressure, the actuator is compressed and the device is extended out radially from the fitting well and is thus deployed.

13. Device (40), such as a wheel unit, designed to be located and fixed in the internal cavity formed by a tyre and a wheel rim to acquire, process and/or transmit information about the condition of the tyre, comprising a module and an antenna, said device being **characterized in that** the antenna is located externally relative to said module and is connected to the module by an actuator comprising a closed-cell foam block according to one of Claims 1 to 10.

14. Device according to Claim 13, in which the actuator is fixed to one end of the antenna.

15. Device, such as a wheel unit, designed to be located and fixed in the internal cavity formed by a tyre and a wheel rim to acquire, process and/or transmit information about the condition of the tyre, comprising a module and an antenna with an inner wall adjacent to the module and an outer wall, the antenna being fixed to the module by one end, said device being **characterized in that** the outer wall of the antenna is covered for part of its length by an elongate block or elongate layer of closed-cell foam material that deforms under the service pressure P, thereby deploying the antenna.

16. Device according to Claim 15, in which the antenna consists of a thin cable or wire embedded in a plastic film, the assembly being flexible along the length.

17. Device according to either of Claims 15 and 16, in which the profile of said closed-cell foam rubber layer has a thickness which decreases progressively from the end connected to the module, to the free end.

## Patentansprüche

1. Aktor (13), der dazu bestimmt ist, in einem mit Druck beaufschlagten Behälter verwendet zu werden, um in Reaktion auf eine Änderung des hydrostatischen Drucks eine Relativbewegung zwischen zwei Elementen hervorzurufen, **dadurch gekennzeichnet, dass** er einen Block (14) aus zelligem Schaumstoff mit geschlossenen Zellen, der an den zwei Elementen (17, 18) befestigt ist, umfasst.

2. Aktor nach Anspruch 1, wobei der Schaumstoffblock zwischen den zwei Elementen angeordnet und an diesen zwei Elementen durch zwei im Wesentlichen ebene und parallele Wände befestigt ist.

3. Aktor nach Anspruch 1, wobei der Schaumstoffblock an diesen zwei Elementen durch zwei im Wesentlichen ebene Wände befestigt ist, die eine Schwenkachse p definieren und untereinander einen Winkel alpha bilden.

4. Aktor nach Anspruch 3, wobei der Winkel alpha kleiner als 180° ist.

5. Aktor nach Anspruch 4, wobei der Winkel alpha im Bereich von 80 bis 100 Grad liegt.

6. Aktor nach einem der Ansprüche 3 bis 5, wobei jede der Wände mit einem der Elemente durch ein starres Befestigungselement verbunden ist und wobei die zwei Befestigungselemente untereinander über ein Scharnier mit einer der Schwenkachse p entsprechenden Drehachse verbunden sind.

7. Aktor nach einem der Ansprüche 1 bis 6, der außerdem eine Sperrraste (31) aufweist, um die zwei Elemente in einer gegebenen Relativposition zu blockieren.

8. Aktor nach einem der Ansprüche 1 bis 7, der zwei Zellenblöcke mit geschlossenen Zellen, die durch eine starre Platte verbunden sind, umfasst.

9. Aktor nach einem der Ansprüche 1 bis 8, wobei das zellige Material mit geschlossenen Zellen aus der Gruppe gewählt ist, die Polyethylen- und Polyurethanschaumstoffe, Schaumstoffe auf der Basis eines Verschnitts aus Nitrilkautschuk und Polyvinylchlorid, aus Polybutadien 1-2, aus Polyisobutylen, aus Polyisopren und aus thermoplastischem Elastomer enthält.

10. Aktor nach einem der Ansprüche 1 bis 9, wobei die Oberflächen der Blöcke aus zelligem Material durch Metallisierung oder Aufbringung einer nicht permeablen dünnen Schicht oder Beschichtung behandelt sind.

11. Anordnung aus Radfelge und einem Organ wie etwa einem Radmodul oder einer Antenne, das dazu bestimmt ist, innerhalb des inneren Hohlraums, der durch einen Luftreifen und eine Radfelge gebildet ist, angeordnet zu werden, **dadurch gekennzeichnet, dass** das Organ an der Radfelge durch einen Aktor nach einem der Ansprüche 1 bis 10, der einen Block aus zelligem Schaumstoff mit geschlossenen Zellen enthält, befestigt ist.

12. Anordnung nach Anspruch 11, wobei das Organ dazu ausgelegt ist, zwei verschiedene Positionen anzunehmen, je nachdem, ob der durch einen Luftreifen und die Radfelge gebildete Hohlraum mit Druck beaufschlagt ist oder nicht:
- bei einem Relativdruck von null ist das Organ in einer Montagekehle der Radfelge angeordnet, die ihm als "Aufnahmesitz" dient und somit eine erleichterte Montage des Luftreifens an der Radfelge ermöglicht; und
- bei Nenn-Fülldruck P oder Betriebsdruck ist der Aktor komprimiert und befindet sich das Organ in Bezug auf die Montagekehle relativ nach außen radial beabstandet, so dass es ausgefahren ist.

13. Organ (40) wie etwa ein Radmodul, das dazu bestimmt ist, im Inneren eines Innenhohlraums angeordnet und befestigt zu werden, der durch einen Luftreifen und eine Radfelge gebildet ist, um Informationen bezüglich des Zustands des Luftreifens zu erfassen, zu verarbeiten und/oder zu übertragen, das ein Gehäuse und eine Antenne enthält, **dadurch gekennzeichnet, dass** die Antenne relativ zu dem Gehäuse außen angeordnet ist und mit dem Gehäuse durch einen Aktor nach einem der Ansprüche 1 bis 10, der einen Block aus zelligem Schaumstoff mit geschlossenen Zellen enthält, verbunden ist.

14. Organ nach Anspruch 13, wobei der Aktor an einem Ende der Antenne befestigt ist.

15. Organ wie etwa ein Radmodul, das dazu bestimmt ist, im Inneren eines Innenhohlraums angeordnet und befestigt zu werden, der durch einen Luftreifen und eine Radfelge gebildet ist, um Informationen bezüglich des Zustands des Luftreifens zu erfassen, zu verarbeiten und/oder zu senden, das ein Gehäuse und eine Antenne mit einer an das Gehäuse angrenzenden Innenwand und einer Außenwand enthält, wobei die Antenne an dem Gehäuse mit einem Ende befestigt ist, **dadurch gekennzeichnet, dass** die Außenwand der Antenne auf einem Teil ihrer Länge durch einen länglichen Block oder eine lang gestreckte Schicht aus einem zelligen Material mit geschlossenen Zellen beschichtet ist, das sich unter dem Betriebsdruck P verformt, wodurch die Antenne ausgefahren wird.

16. Organ nach Anspruch 15, wobei die Antenne aus einem Kabel oder aus feinen Draht, der in einen Kunststofffilm getaucht ist, besteht, wobei die Anordnung nachgiebig ist, um auf ihrer Länge gebogen werden zu können.

17. Organ nach einem der Ansprüche 15 und 16, wobei das Profil der zelligen Kautschukschicht mit geschlossenen Zellen eine Dicke aufweist, die von dem mit dem Gehäuse verbundenen Ende zu dem freien Ende allmählich abnimmt.
